# EUROPEAN PATENT APPLICATION

(11) **EP 4 707 191 A1**
(43) Date of publication of application: **11.03.2026**
(21) Application number: 24800039.0
(22) Date of filing: 27.03.2024
(51) Int. Cl.: B65D 5/06, B65D 5/74

(54) **MOUTH-SPOUT-EQUIPPED PAPER CONTAINER**

(30) Priority: 02.05.2023 JP 2023076016
(71) Applicant: Nippon Paper Industries Co., Ltd., Tokyo 114-0002 (JP)
(72) Inventor: MIURA, Ryo, Tokyo 114-0002 (JP); OKUBO, Katsuyuki, Tokyo 114-0002 (JP); ISHII, Masayasu, Tokyo 114-0002 (JP); MI, Haoran, Tokyo 114-0002 (JP); TOBISAKI, Nana, Tokyo 114-0002 (JP)
(74) Representative: Murgitroyd & Company
(86) International application number: PCT/JP2024/012362
(87) International publication number: WO 2024/228308

(57) **Abstract**

In order to obtain a spout-equipped paper container that achieves downsizing of a spout and effectively prevents pulsation of liquid flowing through the spout when the liquid is poured out, provided is a spout-equipped paper container (1) of gable top type, which includes a spout (18) mounted on any one of a pair of gable roof forming panels (10, 11) that form a top portion (16). An inclination angle of the pair of gable roof forming panels that form the top portion is set to 35 degrees or more and 55 degrees or less.

## Description

### Technical Field

The present invention relates to a spout-equipped paper container for storing liquid such as milk or juice.

### Background Art

As a paper container for storing liquid such as milk or juice, a gable top type spout-equipped paper container has been widely used (see, for example, Patent Literature 1). The spout-equipped paper container is formed of a paperboard material having front and back surfaces on each of which a thermoplastic resin is deposited. The spout-equipped paper container includes four body panels. Edge portions are joined with use of a vertical-direction sealing panel to thereby form a body. A pair of gable roof forming panels opposed to each other, each having an outer-side top sealing panel on an upper side, and a pair of gable wall forming panels opposed to each other, each having an inner-side top sealing panel on an upper side, are formed continuously with upper ends of the body panels. The pair of gable wall forming panels are folded inwardly between the pair of gable roof forming panels. The outer-side top sealing panels and the inner-side top sealing panels are heated and sealed at a predetermined position to achieve tight sealing to thereby form a top portion. A spout is mounted to any one of the pair of gable roof forming panels.

For a spout of such a spout-equipped paper container, a spout made of a resin is typically used.

Currently, there is an increasing demand for minimized use of resin in resin products in terms of environmental contamination caused by disposal. Thus, also for a spout-equipped paper container, downsizing of a spout is desired.

For a related-art spout-equipped paper container, generally, a paper container with about 70 mm as a square section dimension of the body and about 30 degrees as a top-portion inclination angle is widely used. Further, as the spout, a spout having an aperture diameter (diameter of a portion of the spout through which liquid is to flow out) of from 20 mm to 30 mm is widely used as the spout.

### Citation List

### Patent Literature

[PTL 1] JP 9-226755 A

### Summary of Invention

### Technical Problem

As described above, the downsizing of the spout is desired also for the spout-equipped paper container in terms of environmental contamination. When the spout is downsized, the aperture diameter is also reduced. With the spout having a small aperture diameter, however, liquid flowing toward the spout tends to fill and clog the spout when the liquid is poured out. The liquid that tends to flow out from the spout and air that tends to enter the paper container through the spout push against each other. The liquid flowing through the spout is pushed by the air that tends to enter the paper container, resulting in that the liquid comes out from the spout in a pulsated state with irregular intensity. Thus, for example, spilling liquid from a glass (cup) or the like occurs, and hence successful pouring of liquid cannot be expected in some cases. Further, there arises another problem in that a poured amount of liquid may be restricted.

As a result of repeated experiments and studies conducted to solve the above-mentioned problems while attempting to downsize the spout, the inventors of the present invention have focused on an inclination angle of each of gable roof forming panels that form a top portion to which a spout is mounted, and have accomplished the present invention.

An object of the present invention is to provide a spout-equipped paper container that enables downsizing of a spout and effective prevention of pulsation of liquid flowing through the spout when the liquid is poured out.

### Solution to Problem

In order to achieve the object described above, according to the invention described in claim 1, there is provided a spout-equipped paper container, the spout-equipped paper container being of gable top type, which is made of a paperboard material having front and back surfaces on each of which a thermoplastic resin is deposited, the spout-equipped paper container including: four body panels having edge portions joined with use of a vertical-direction sealing panel to form a body; a pair of gable roof forming panels opposed to each other, each having an outer-side top sealing panel on an upper side, and a pair of gable wall forming panels opposed to each other, each having an inner-side top sealing panel on an upper side, the gable roof forming panels and the gable wall forming panels being formed continuously with upper ends of the body panels, the pair of gable wall forming panels being inwardly folded between the pair of gable roof forming panels, the outer-side top sealing panels and the inner-side top sealing panels being heated and sealed at a predetermined position to achieve tight sealing to form a top portion; and a spout mounted to any one of the pair of gable roof forming panels. An inclination angle of the gable roof forming panels that form the top portion is set to 35 degrees or more and 55 degrees or less.

According to the invention described in claim 1, the inclination angle of the pair of gable roof forming panels that form the top portion is set to 35 degrees or more. Thus, the inclination angle is larger than, for example, a top-portion inclination angle of a related-art paper container, which is about 30 degrees. Thus, an angle formed between the pair of gable roof forming panels and the body panels with which the pair of gable roof forming panels are formed continuously is gentler. Accordingly, when the spout-equipped paper container is tilted to pour out the liquid, the liquid cannot be successfully poured out without tilting the spout-equipped paper container by an angle larger than an angle by which the related-art spout-equipped paper container is required to be tilted to pour out liquid. As a result, the liquid is prevented from suddenly flowing to the vicinity of the spout all at once. Thus, air can more easily be taken into the spout-equipped paper container through the spout. Accordingly, pulsation of the liquid discharged from the spout is effectively suppressed, allowing an aperture diameter of the spout to be reduced. Thus, the spout can be downsized correspondingly.

Further, the inclination angle of the pair of gable roof forming panels is set to 55 degrees or less. Thus, for example, the following disadvantages can be prevented: an angle by which the spout-equipped paper container is tilted to cause the liquid to start flowing into the spout is excessively large, and hence time and effort are required to discharge the liquid; a height of the top portion is excessively large, which causes a dead space inside the spout-equipped paper container; and the amount of use of paper material increases.

According to the invention described in claim 2, in claim 1, folding lines for inward folding that are formed on the pair of gable wall forming panels so as to allow the pair of gable wall forming panels to be inwardly folded between the gable roof forming panels each have an inwardly curved arc shape.

According to the invention described in claim 2, the folding lines for inward folding formed on the pair of gable wall forming panels each have an inwardly curved arc shape. Thus, when a paperboard material is formed into a paper container, arc-shaped inwardly folded edge portions formed by inwardly folding the pair of gable wall forming panels along the folding lines for inward folding protrude toward the spout. The protruding portions guide the liquid stored in the spout-equipped paper container in a direction toward the spout at the time of discharge of the liquid, allowing the liquid to be more easily discharged from the spout.

According to the invention described in claim 3, in claim 1 or 2, the pair of gable wall forming panels are formed continuously with the upper ends of the body panels under presence of top-portion horizontal folding lines between the pair of gable wall forming panels and the upper ends, and the top-portion horizontal folding lines each have a downwardly convex arc shape.

According to the invention described in claim 3, the pair of gable wall forming panels are formed continuously with the upper ends of the body panels under the presence of the top-portion horizontal folding lines between the pair of gable wall forming panels and the upper ends. The top-portion horizontal folding lines each have a downwardly convex arc shape. Accordingly, an angle formed between the pair of gable wall forming panels and the body panels with which the pair of gable wall forming panels are formed continuously is larger and gentler than an angle formed when the top-portion horizontal folding lines are straight lines. Thus, the liquid in the spout-equipped paper container is more easily guided in the direction toward the spout at the time of discharge of the liquid, allowing the liquid to be more easily discharged from the spout.

According to the invention described in claim 4, in claim 3, a distance to the top-portion horizontal folding line from an imaginary line that connects upper ends of both lateral sides of the body panel with which the gable wall forming panel is formed continuously is 5% or more and 15% or less of a lateral width of the body panel.

According to the invention described in claim 4, the distance to the top-portion horizontal folding line from the imaginary line that connects the upper ends of both lateral sides of each of the body panels with which the pair of gable wall forming panels are formed continuously is 5% or more of the lateral width of the body panel. Thus, the angle formed between the pair of gable wall forming panels and the body panels is an angle that is more preferred for guiding the liquid stored in the spout-equipped paper container in the direction toward the spout at the time of discharge of the liquid.

Further, the distance to the top-portion horizontal folding line from the imaginary line is 15% or less of the lateral width of the body panel. Thus, the protrusions having the top-portion horizontal folding lines between the pair of gable wall forming panels and the body panels as vertices are less large. Accordingly, there is little risk of, for example, interference with a neighboring paper container during shipment, resulting in generation of a flaw due to scratching on an interfering portion.

### Advantageous Effects of Invention

As described above, with the spout-equipped paper container according to the present invention, it is possible to enable downsizing of the spout and effective prevention of the pulsation of the liquid flowing through the spout when the liquid is poured out.

### Brief Description of Drawings

FIG. 1 is a front view for illustrating one example of a spout-equipped paper container according to an embodiment of the present invention.
FIG. 2 is a side view of FIG. 1.
FIG. 3 is an explanatory developed view of the spout-equipped paper container illustrated in FIG. 1.
FIG. 4 is an explanatory view for illustrating inwardly folded end portions of gable wall forming panels, which are visible through an opening of a spout that is mounted to a gable roof forming panel.
FIG. 5 is an explanatory view for illustrating another example of top-portion horizontal folding lines illustrated in FIG. 3.
FIG. 6 is an explanatory view for comparison between a tilt of the spout-equipped paper container illustrated in FIG. 1 and a tilt of a related-art spout-equipped paper container at the start of discharge of liquid.

### Description of Embodiments

Now, a spout-equipped paper container according to an embodiment of the present invention is described in detail with reference to the drawings.

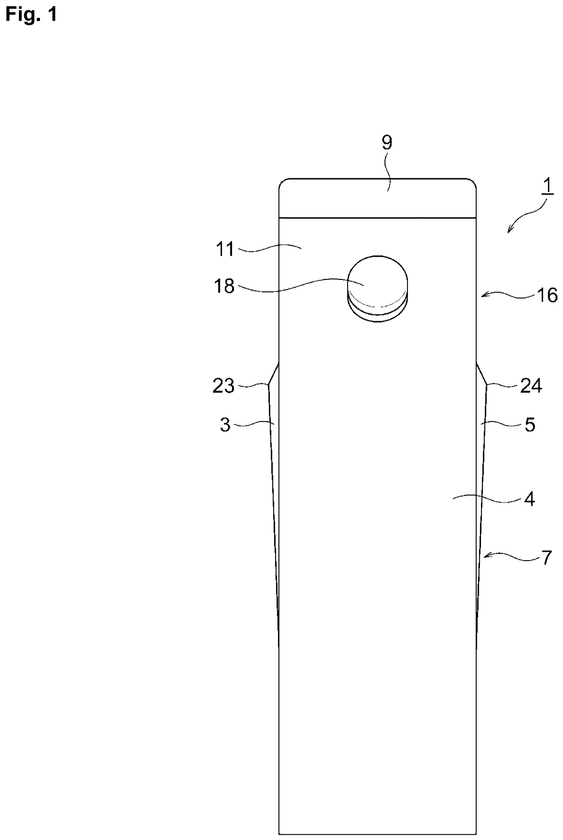

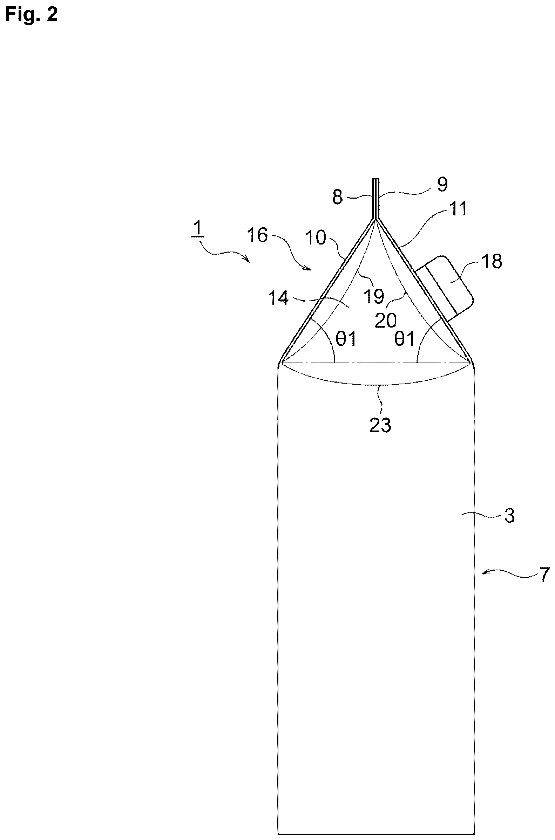

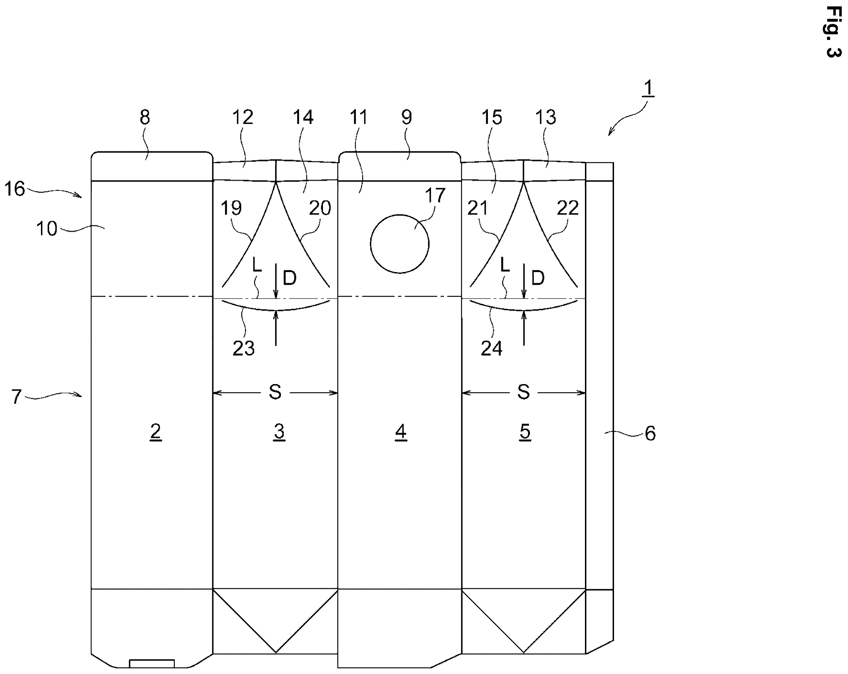

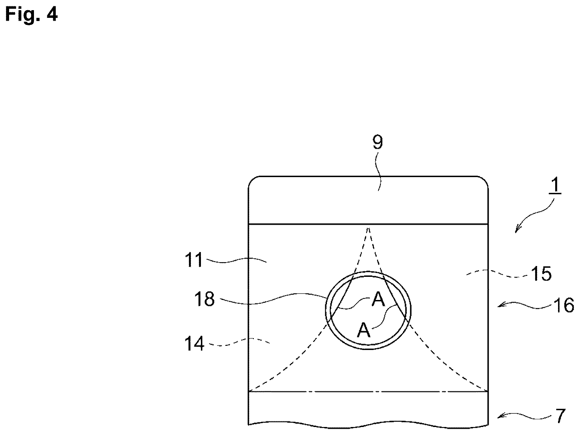

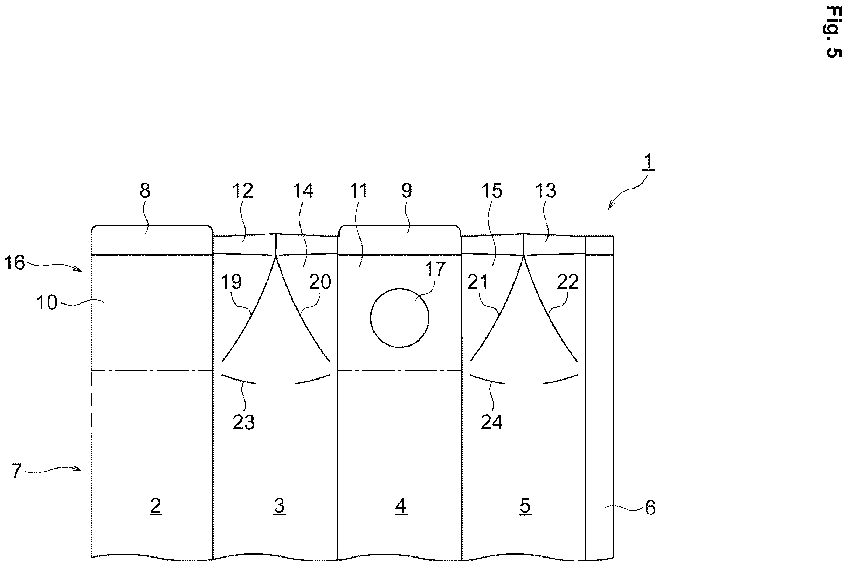

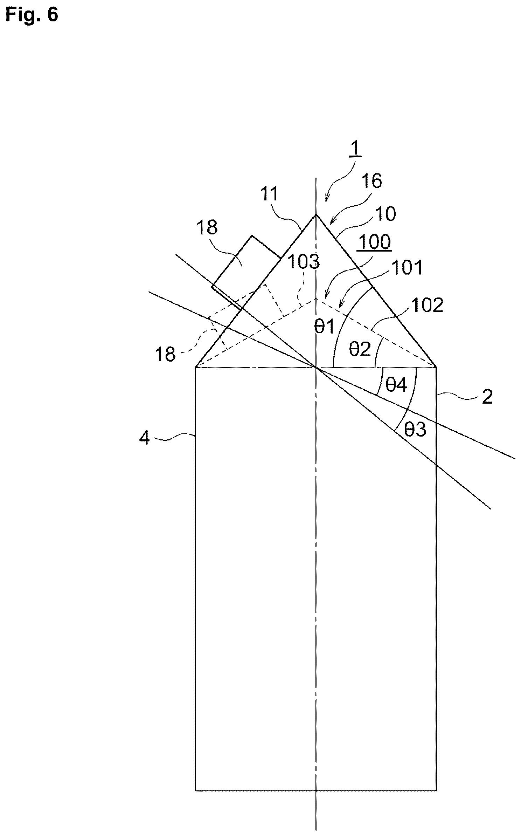

FIG. 1 to FIG. 5 show one example of the spout-equipped paper container according to the embodiment of the present invention, in which FIG. 1 is a front view of the spout-equipped paper container of this example, FIG. 2 is a side view of FIG. 1, FIG. 3 is an explanatory developed view of the spout-equipped paper container illustrated in FIG. 1, FIG. 4 is an explanatory view for illustrating inwardly folded end portions of gable wall forming panels, which are visible through an opening of a spout that is mounted to a gable roof forming panel, and FIG. 5 is an explanatory view for illustrating another example of top-portion horizontal folding lines illustrated in FIG. 3. FIG. 6 is an explanatory view for comparison between discharge of liquid from the spout-equipped paper container illustrated in FIG. 1 and a tilt of a related-art spout-equipped paper container at the start of discharge of liquid.

A spout-equipped paper container 1 of this example is formed of a paperboard material having front and back surfaces on each of which a thermoplastic resin is deposited, and includes four body panels 2, 3, 4, 5. Edge portions are joined with use of a vertical-direction sealing panel 6 to thereby form a body 7. In this example illustrated in FIG. 1 to FIG. 5, a lateral width of each of the body panels 2, 3, 4, 5 is 70 mm, which is a typical square section dimension of the body. In the present invention, a body panel having a square section dimension of from 40 mm to 75 mm is preferably used.

A pair of gable roof forming panels 10, 11 opposed to each other, which have outer-side top sealing panels 8, 9 on their upper sides, are formed continuously with upper ends of the body panels 2, 4. Further, a pair of gable wall forming panels 14, 15 opposed to each other, which have inner-side top sealing panels 12, 13 on their upper sides, are formed continuously with upper ends of the body panels 3, 5. The gable wall forming panels 14, 15 are folded inwardly between the gable roof forming panels 10, 11. The outer-side top sealing panels 8, 9 and the inner-side top sealing panels 12, 13 are heated and sealed at a predetermined position to achieve tight sealing to thereby form a top portion 16 of gable top type. A spout mounting hole 17 is formed in any one of the gable roof forming panels 10, 11 that form the top portion 16, which is the gable roof forming panel 11 in this example, and a spout 18 is mounted thereto.

In this example, an inclination angle θ1 of the gable roof forming panels 10, 11 that form the top portion 16 is 35 degrees or more and 55 degrees or less.

Further, folding lines for inward folding 19, 20, 21, 22 for inwardly folding the gable wall forming panels 14, 15 between the gable roof forming panels 10, 11 are formed on the gable wall forming panels 14, 15. In this example, the folding lines for inward folding 19, 20, 21, 22 each have an inwardly curved arc shape. A curvature of the arc shape of the folding lines for inward folding 19, 20, 21, 22 is not limited to any particular curvature. However, it is preferred that the curvature be set such that inwardly folded end portions A, which are defined by the folding lines for inward folding 19, 20, 21, 22 when the gable wall forming panels 14, 15 are folded inwardly along the folding lines for inward folding 19, 20, 21, 22, are positioned in the vicinity of an opening of the spout 18 mounted to the gable roof forming panel 11 or are positioned so as to be slightly visible through the opening (the inwardly folded end portions A are visible by 5 mm or less when viewed from a front side). In this example, the curvature of the arc shape of the folding lines for inward folding 19, 20, 21, 22 is set such that the inwardly folded end portions A of the gable wall forming panels 14, 15 are positioned so as to be slightly visible through the opening of the spout 18 (see FIG. 4).

Further, in this example, the gable wall forming panels 14, 15 and the body panels 3, 4, which are formed continuously, are defined by top-portion horizontal folding lines 23, 24, respectively. The top-portion horizontal folding lines 23, 24 each have a downwardly convex arc shape that is curved downwardly. As a result, protrusions having the top-portion horizontal folding lines 23, 24 between the gable wall forming panels 14, 15 and the body panels 3, 4 as vertices are formed (see FIG. 1).

In a related-art paper container, after liquid is filled into the paper container, a lower part of a carton bulges under weight of the liquid (so-called "load bulge" occurs), causing impairment of appearance. However, the presence of the protrusions can prevent the body 7 from being deformed. In recent years, there have been some cases in which a reduction in basis weight of the paperboard material is required in terms of resource saving. However, the protrusions have an advantage in that load bulge can be suppressed even with base paper having a reduced basis weight. For related-art paper containers, it is common to use a paperboard material having a basis weight of more than 300 g/m². In this example, however, a paperboard material having a basis weight of less than 300 g/m² can also be used. In this example, a paperboard material preferably having a basis weight of 200 g/m² and more and less than 400 g/m², more preferably having a basis weight of 250 g/m² and more and less than 350 g/m², particularly preferably having a basis weight of 250 g/m² and more and less than 300 g/m² can be used.

Meanwhile, when the paper container has the protrusions, the protrusions may accidentally come into contact with a neighboring container during shipment or at the time when the paper container is displayed for sale, making a flaw or leaving a scratch mark in a contact portion in some cases.

In this example, the top-portion horizontal folding lines 23, 24 each have a downwardly convex arc shape that is continuous from a start point to an end point thereof. However, the shape is not limited thereto. As illustrated in FIG. 5, the top-portion horizontal folding lines 23, 24 may each be interrupted in its center portion. With such a shape, the formation of the protrusions having the top-portion horizontal folding lines 23, 24 between the gable wall forming panels 14, 15 and the body panels 3, 4 as vertices is reduced.

A distance D of each of the top-portion horizontal folding lines 23, 24 from an imaginary line L that connects upper ends of both lateral sides of each of the body panels 3, 5 with which the gable wall forming panels 14, 15 are formed continuously is 5% or more and 15% or less of a lateral width S of each of the body panels 3, 5.

Further, in this example, as described above, the body panels 3, 5 and the gable wall forming panels 14, 15 that are formed continuously with the upper ends of the body panels 3, 5 are defined by the top-portion horizontal folding lines 23, 24. However, there are no top-portion horizontal folding lines between the body panels 2, 4 and the gable roof forming panels 10, 11 that are formed continuously with the upper ends of the body panels 2, 4. Thus, the body panels 2, 4 and the gable roof forming panels 10, 11 are formed continuously without any boundary lines therebetween.

Thus, at boundaries between the gable roof forming panels 10, 11 that form the top portion 16, which is formed by inwardly folding the gable wall forming panels 14, 15 between the gable roof forming panels 10, 11, and the body panels 2, 4 that form the body 7, areas in which the gable roof forming panels 10, 11 are formed continuously with the upper ends of the body panels 2, 4 each have a shape of being bent in an arc-like shape (see FIG. 1).

With the spout-equipped paper container 1 configured as described above, the inclination angle θ1 of the gable roof forming panels 10, 11 that form the top portion 16 is set to 35 degrees or more. Thus, for example, the inclination angle is larger than an inclination angle θ2 of gable roof forming panels 102, 103 that form a top portion 101 of a related-art spout-equipped paper container 100, which is about 30 degrees, and hence an angle formed between the gable roof forming panels 10, 11 and the body panels 2, 4 with which the gable roof forming panels 10, 11 are formed continuously is gentler. Accordingly, when liquid is poured out by tilting the spout-equipped paper container 1, the liquid cannot be successfully discharged without tilting the spout-equipped paper container 1 by an angle larger than an angle by which the related-art spout-equipped paper container 100 is required to be tilted (see FIG. 6). In FIG. 6, a tilt angle (discharge start angle) θ3 of the spout-equipped paper container 1 at which the discharge of the liquid from the spout 18 is started and a tilt angle (discharge start angle) θ4 of the related-art spout-equipped paper container 100 at which the discharge of the liquid from the spout 18 is started are compared with each other for the spout-equipped paper container 1 of this example in which the inclination angle θ1 of the gable roof forming panels 10, 11 is set to 50 degrees and the spout-equipped paper container 100 with the top-portion inclination angle θ2 of 30 degrees.

As a result, a sudden flow of liquid contents into the vicinity of the spout all at once is suppressed. Thus, filling and clogging of the spout 18 with the liquid that has flowed into the spout 18, which may be caused when the liquid is poured out, can be effectively prevented. Accordingly, air can more easily be taken into the spout-equipped paper container 1 through the spout 18. As a result, pulsation of the liquid discharged from the spout 18 is effectively suppressed. Thus, an aperture diameter of the spout 18 can be reduced to thereby enable corresponding downsizing of the spout 18. In addition, an area of each of the gable wall forming panels 14, 15 is larger than that of each of gable wall forming panels of a related-art container, and hence the spout-equipped paper container 1 has such a shape that allows a consumer to easily pick up the container from shelves at the time of purchase.

Specifically, regarding the aperture diameter of the spout 18, even the use of a spout having an aperture diameter of, for example, 25 mm or less can effectively suppress the pulsation of the liquid in the present invention. When the aperture diameter is excessively small, the pulsation of the liquid occurs. Thus, in the present invention, it is preferred to use a spout having an aperture diameter of 15 mm or more and 25 mm or less, more preferably a spout having an aperture diameter of 20 mm or more and 25 mm or less.

When the inclination angle θ1 of the gable roof forming panels 10, 11 that form the top portion 16 is less than 35 degrees, the angle (discharge start angle) by which the spout-equipped paper container 1 is tilted to cause the liquid to start flowing into the spout 18 is smaller. Thus, the liquid is more liable to suddenly flow into the vicinity of the spout 18 all at once. Accordingly, it is difficult to reduce the aperture diameter of the spout 18.

The angle by which the spout-equipped paper container 1 is tilted to cause the liquid to be discharged from the spout 18, that is, the discharge start angle is derived from the inclination angle θ1 of the gable roof forming panels 10, 11. The discharge start angle θ3 is preferably 55 degrees or more and less than 70 degrees, particularly preferably 55 degrees or more and less than 65 degrees. Even when a spout having a relatively small aperture diameter of 20 mm or more and 25 mm or less is used, pulsation or splashing is less liable to occur, resulting in that ease of pouring is improved.

Tests for ease of pouring of liquid at the time when the liquid is poured out are conducted for Examples of the present invention and Comparative Example. The test results are shown in Table 1.

### Evaluation of ease of pouring

∘: easy pouring
△: difficult pouring

**Table 1**

| | Inclination angle of gable roof forming panel | Discharge start angle | Result |
|---|---|---|---|
| Example 1 | 40 degrees | 55 degrees | ○ |
| Example 2 | 50 degrees | 60 degrees | ○ |
| Comparative Example 1 | 30 degrees | 50 degrees | △ |

Further, the inclination angle θ1 of the gable roof forming panels 10, 11 that form the top portion 16 is set to 55 degrees or less. Thus, for example, the following disadvantages can be prevented: an angle by which the spout-equipped paper container 1 is tilted to cause the liquid to start flowing into the spout 18 is excessively large, and hence time and effort are required to discharge the liquid; a height of the top portion 16 is excessively large, which causes a dead space inside the spout-equipped paper container 1; and the amount of use of paper material increases.

When the inclination angle θ1 of each of the gable roof forming panels 10, 11 exceeds 55 degrees, time and effort are required to pour out the liquid. Further, the spout-equipped paper container 1 has a dead space inside, and the amount of use of paper material increases.

Further, in this example, in order to inwardly fold the gable wall forming panels 14, 15 between the gable roof forming panels 10, 11, the folding lines for inward folding 19, 20, 21, 22 formed on the gable wall forming panels 14, 15 each have an inwardly curved arc shape. Thus, the arc-shaped inwardly folded end portions A formed by inwardly folding the gable wall forming panels 14, 15 along the folding lines for inward folding 19, 20, 21, 22 protrude toward the spout 18. When the liquid is poured out, the protruding portions guide the liquid stored in the spout-equipped paper container 1 in a direction toward the spout 18, thus facilitating the discharge of the liquid from the spout 18.

Further, in this example, the top-portion horizontal folding lines 23, 24, with which the gable wall forming panels 14, 15 and the body panels 3, 5 are formed continuously, each have a downwardly convex arc shape. Accordingly, an angle formed between the gable wall forming panels 14, 15 and the body panels 3, 5 is larger and gentler than an angle formed when the top-portion horizontal folding lines 23, 24 are straight lines. Thus, the liquid in the spout-equipped paper container 1 is more easily guided in the direction toward the spout 18 at the time of discharge of the liquid, allowing the liquid to be more easily discharged from the spout 18.

Further, in this example, the distance D to the top-portion horizontal folding lines 23, 24 from the imaginary line L that connects the upper ends of both lateral sides of each of the body panels 3, 5 with which the gable wall forming panels 14, 15 are formed continuously is 5% or more of the lateral width S of the body panels 3, 5. Thus, the angle formed between the gable wall forming panels 14, 15 and the body panels 3, 5 is an angle that is more preferred for guiding the liquid stored in the spout-equipped paper container 1 in the direction toward the spout 18 at the time of discharge of the liquid.

When the distance D to the top-portion horizontal folding lines 23, 24 from the imaginary line L is 5% or less of the lateral width S of the body panels 3, 5, an angle formed between the gable wall forming panels 14, 15 and the body panels 3, 5 is close to an angle formed between the gable wall forming panels 14, 15 and the body panels 3, 5 when the top-portion horizontal folding lines 23, 24 are straight lines. Thus, the angle is not satisfactory in terms of guiding of the liquid stored in the spout-equipped paper container 1 in the direction toward the spout 18 when the liquid is poured out.

Further, the distance D to the top-portion horizontal folding lines 23, 24 from the imaginary line L is 15% or less of the lateral width S of the body panels 3, 5. Thus, there is little risk of, for example, interference of the protrusions having the top-portion horizontal folding lines 23, 24 between the gable wall forming panels 14, 15 and the body panels 3, 5 as vertices with a neighboring spout-equipped paper container 1 during shipment, resulting in that generation of a flaw due to scratching on an interfering portion.

When the distance D to the top-portion horizontal folding lines 23, 24 from the imaginary line L exceeds 15% of the lateral width S of the body panels 3, 5, the protrusions having the top-portion horizontal folding lines 23, 24 as vertices are larger and hence interfere with a neighboring spout-equipped paper container 1. As a result, an interfering portion may be scratched and have a flaw in some cases.

In this example, the top-portion horizontal folding lines 23, 24 each have a downwardly convex arc shape that is continuous from the start point to the end point. When the top-portion horizontal folding lines 23, 24 are each interrupted in its center portion as illustrated in FIG. 5, the formation of the protrusions having the top-portion horizontal folding lines 23, 24 between the gable wall forming panels 14, 15 and the body panels 3, 4 as vertices is reduced. Thus, interference with a neighboring spout-equipped paper container 1 during shipment can be further suppressed.

### Reference Signs List

1 spout-equipped paper container
2, 3, 4, 5 body panel
6 vertical-direction sealing panel
7 body
8, 9 outer-side top sealing panel
10, 11 gable roof forming panel
12, 13 inner-side top sealing panel
14, 15 gable wall forming panel
16 top portion
17 spout mounting hole
18 spout
19, 20, 21, 22 folding line for inward folding
23, 24 top-portion horizontal folding line
100 related-art spout-equipped paper container
101 top portion
102, 103 gable roof forming panel
L imaginary line
D distance to top-portion horizontal folding line from imaginary line
S lateral width of body panel
θ1 inclination angle of gable roof forming panel in the present invention
θ2 inclination angle of related-art gable roof forming panel
θ3 tilt angle of spout-equipped paper container in the present invention at start of discharge of liquid
θ4 tilt angle of related-art spout-equipped paper container at start of discharge of liquid

## Claims

1. A spout-equipped paper container, the spout-equipped paper container being of gable top type, which is made of a paperboard material having front and back surfaces on each of which a thermoplastic resin is deposited, the spout-equipped paper container comprising:
four body panels having edge portions joined with use of a vertical-direction sealing panel to form a body;
a pair of gable roof forming panels opposed to each other, each having an outer-side top sealing panel on an upper side, and a pair of gable wall forming panels opposed to each other, each having an inner-side top sealing panel on an upper side, the gable roof forming panels and the gable wall forming panels being formed continuously with upper ends of the body panels, the pair of gable wall forming panels being inwardly folded between the pair of gable roof forming panels, the outer-side top sealing panels and the inner-side top sealing panels being heated and sealed at a predetermined position to achieve tight sealing to form a top portion; and
a spout mounted to any one of the pair of gable roof forming panels,
wherein an inclination angle of the gable roof forming panels that form the top portion is set to 35 degrees or more and 55 degrees or less.

2. The spout-equipped paper container according to claim 1, wherein folding lines for inward folding that are formed on the pair of gable wall forming panels so as to allow the pair of gable wall forming panels to be inwardly folded between the gable roof forming panels each have an inwardly curved arc shape.

3. The spout-equipped paper container according to claim 1 or 2, wherein the pair of gable wall forming panels are formed continuously with the upper ends of the body panels under presence of top-portion horizontal folding lines between the pair of gable wall forming panels and the upper ends, and the top-portion horizontal folding lines each have a downwardly convex arc shape.

4. The spout-equipped paper container according to claim 3, wherein a distance to the top-portion horizontal folding line from an imaginary line that connects upper ends of both lateral sides of the body panel with which the gable wall forming panel is formed continuously is 5% or more and 15% or less of a lateral width of the body panel.
